# EUROPEAN PATENT APPLICATION

(11) **EP 3 509 276 A1**
(43) Date of publication of application: **10.07.2019**
(21) Application number: 18214272.9
(22) Date of filing: 19.12.2018
(51) Int. Cl.: H04L 29/12

(54) **DEVICES, NETWORKS, STORAGE MEDIA, AND METHODS FOR IDENTIFYING CLIENT DEVICES ACROSS A NETWORK ADDRESS TRANSLATION BORDER**

(30) Priority: 09.01.2018 US 201862615086 P; 29.03.2018 US 201815939672
(71) Applicant: Circle Media Labs Inc., Portland, OR 97209 (US)
(72) Inventor: ZHANG, Tiebing, Cypress, California 90630 (US)
(74) Representative: HGF Limited

(57) **Abstract**

Devices, networks, storage media, and methods for identifying client devices across a network address translation border. The devices include devices that perform the methods. The methods include methods of generating client-specific identifiers for a protocol data unit (PDU) utilizing a network address translation (NAT) device that performs network address translation. The PDU includes a header and a payload and these methods include embedding a client-specific tag within the header of the PDU to generate a modified PDU and transmitting the modified PDU and a client table to an upstream device. The methods also include methods of interpreting client-specific identifiers within a PDU with an upstream device. These methods include receiving the client table and the modified PDU with the upstream device and determining, based upon the modified PDU and the client table, a unique client identifier of a given client device.

## Description

### RELATED APPLICATION

This application claims priority to U.S. Provisional Patent Application No. 62/615,086, which was filed on January 9, 2018, and the complete disclosure of which is hereby incorporated by reference.

### FIELD OF THE DISCLOSURE

The present disclosure relates to devices, networks, storage media, and methods for identifying client devices across a network address translation (NAT) border.

### BACKGROUND OF THE DISCLOSURE

In common networking infrastructures, routers may be utilized to send, convey, and/or relay information between client devices of a local network and remote (upstream) resources. Routers connect networks (e.g., private networks to public networks) and generally perform network address translation (NAT) to facilitate Internet protocol (IP) traffic flow. NAT is a technique in which the NAT device (typically the router) acts essentially as an agent for the individual client devices. The client devices communicate with the remote resources through the NAT device, with the NAT device transparently translating the communication addresses of the client devices. Because of NAT, the remote resources only know that they are communicating with the NAT device (router) and not any particular client device.

NAT translates the IP addresses of the client devices in the local network to one or more IP addresses controlled by the router. In doing so, NAT may reduce the number of public IP addresses needed and may mask the individual client devices (also called IP masquerading). As a result, NAT has become an essential tool in conserving global address space allocations in face of IPv4 address exhaustion. With NAT, one Internet-routable IP address may serve an entire private network.

NAT may have additional benefits, such as masking the IP address, and thus the identity, of the client device to provide additional security and/or anonymity for the client device. However, such masking of the identities of computing devices downstream from a NAT device has led to numerous technical problems in current computing networks. Specifically, because upstream computing devices are unable to identify the source computing devices for data packets that are received via a NAT device, the ability of upstream computing devices to provide processing dedicated to individual client devices (e.g., to monitor, log, filter, cache, firewall, etc.) that are downstream of a NAT device is inhibited. This can impede the ability of computing devices upstream from a NAT device to respond to packets associated with illicit actions and/or malicious code.

For example, when current Internet service provider (ISP) resources detect malicious or suspect IP traffic but cannot discern the identity of an individual source client device due to an intermediate NAT device, current ISP resources must isolate or deny service for all computing devices downstream from the NAT device (e.g., the entire local network) rather than just the offending client device. Thus, there exists a need for improved routers, NAT devices, upstream devices, and methods for identifying client devices.

### SUMMARY OF THE DISCLOSURE

Devices and methods for identifying client devices across a network address translation border. The devices include local area networks and Internet service providers that perform the methods. The devices also include computer-readable storage media including computer-readable instructions that instruct the devices to perform the methods.

The methods may include methods of generating client-specific identifiers for a protocol data unit (PDU) utilizing a network address translation (NAT) device that performs network address translation. The PDU includes a header and a payload. These methods include receiving, from a given client device of a plurality of client devices serviced by the NAT device and with the NAT device, the PDU. These methods also include determining, with the NAT device, a unique client identifier for the given client device and establishing, with the NAT device, a client-specific tag for the given client device. These methods further include storing, on the NAT device, the unique client identifier and the client-specific tag in a client table. The client table correlates a given unique client identifier to a corresponding client-specific tag for each active client device in the plurality of client devices. These methods also include transmitting, with the NAT device and to an upstream device, the client table and embedding, with the NAT device, a client-specific tag within the header of the PDU to generate a modified PDU. These methods further include transmitting, with the NAT device and to the upstream device, the modified PDU.

The methods also may include methods of interpreting client-specific identifiers within a PDU with an upstream device. These methods include receiving, from a NAT device and with the upstream device, a client table that correlates a given unique client identifier to a corresponding client-specific tag for a given client device of a plurality of client devices serviced by the NAT device. These methods also include associating, with the upstream device, the client table to an identity of the NAT device. These methods further include receiving, from the NAT device and with the upstream device, a modified PDU, wherein the modified PDU includes a payload and a modified header that includes a client-specific tag for the given client device. These methods also include analyzing, with the upstream device, the modified PDU to determine that the modified header includes the client-specific tag. These methods further include extracting, with the upstream device and from the modified header, the client-specific tag for the given client device. These methods also include determining, with the upstream device, the given unique client identifier of the given client device. The unique client identifier is based upon the client-specific tag and the identity of the NAT device, as described in the client table.

### BRIEF DESCRIPTION OF THE DRAWINGS

Fig. 1 is a schematic representation of examples of networking infrastructure according to the present disclosure.
Fig. 2 is a schematic representation of a protocol data unit that may be conveyed by the networking infrastructure of Fig. 1.
Fig. 3 is a message flow diagram illustrating examples of methods according to the present disclosure.
Fig. 4 is a flowchart depicting examples of methods according to the present disclosure.
Fig. 5 is a schematic representation of an example of a computing system that may be included in and/or utilized with routers and/or upstream devices, according to the present disclosure.

### DETAILED DESCRIPTION AND BEST MODE OF THE DISCLOSURE

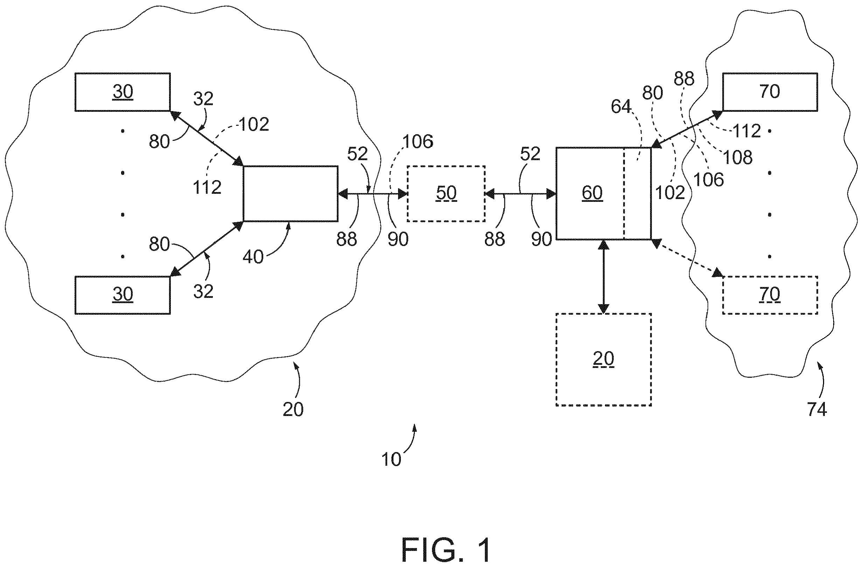

Figs. 1-5 illustrate network address translation (NAT) devices, upstream devices, and/or methods for identifying source client devices of packets transmitted via a NAT device, according to the present disclosure. In general, in the drawings, elements that are likely to be included in a given embodiment are illustrated in solid lines, while elements that are optional or alternatives are illustrated in dashed lines. However, elements that are illustrated in solid lines are not essential to all embodiments of the present disclosure, and an element shown in solid lines may be omitted from a particular embodiment without departing from the scope of the present disclosure. Elements that serve a similar, or at least substantially similar, purpose are labelled with numbers consistent among the figures. Like numbers in each of the figures, and the corresponding elements, may not be discussed in detail herein with reference to each of the figures. Similarly, all elements may not be labelled or shown in each of the figures, but reference numerals associated therewith may be used for consistency. Elements, components, and/or features that are discussed with reference to one or more of the figures may be included in and/or used with any of the figures without departing from the scope of the present disclosure.

Fig. 1 is a schematic representation of examples of networking infrastructure 10 for identifying source client devices of packets transmitted via a NAT device, according to the present disclosure. Networking infrastructure 10 includes a local network 20 of one or more client devices 30 that are configured to communicate with one or more destination devices 70 in a remote network 74. The local network 20 may be, and/or may include, a local area network and/or a private network. The remote network 74 may be, and/or may include, a wide area network, a public network, and/or the Internet. In the communication circuit, or linkage, between client device 30 and destination device(s) 70 are a NAT device 40 and an upstream device 60. NAT device 40 is a network edge device of local network 20 that performs network address translation on protocol data units (PDUs) 80 coming from client devices 30 and bound for destination device(s) 70.

As discussed further herein, PDUs 80 generally are Ethernet frames (link layer) or Internet protocol (IP) packets (network layer). PDUs 80 may include an outgoing PDU 102, coming from the client device 30 and destined to the destination device 70, and an incoming PDU 112, coming from destination device 70 and destined to the client device 30.

Client devices 30, which may be referred to as hosts and/or peers, communicate with NAT device 40 via one or more local area communication linkages 32 (e.g., wired or wireless connections). NAT device 40 may be an independent network appliance or may be integrated with one or more other network appliances such as a router, a firewall, a gateway, and/or a DHCP server (dynamic host configuration protocol server). NAT device 40 is at the network edge of local network 20 and is connected, directly or indirectly, to the upstream device 60 via one or more communication linkages 52 (e.g., wired or wireless connections).

The communication circuit between NAT device 40 and upstream device 60 may include one or more intermediate devices 50. Intermediate devices 50 generally are layer 1 (physical layer), layer 2 (link layer), or layer 3 (network layer) devices such as a repeater, a modem, a cable modem termination system, a digital subscriber line access multiplexer, a fiber optic switch, a hub, a switch, a bridge, and/or a router. Intermediate devices 50, when present, do not interfere with the contents of the various PDUs 80 described herein.

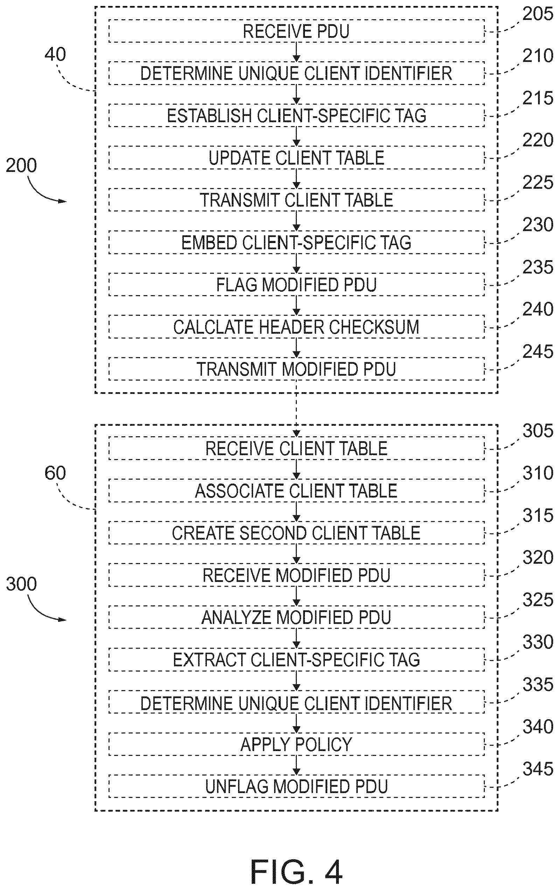

During operation of networking infrastructure 10, a given client device 30 may provide outgoing PDU 102 to NAT device 40 via a corresponding local area communication linkage 32. NAT device 40 may receive outgoing PDU 102 and perform network address translation on the outgoing PDU. NAT device 40 also may perform any suitable portion, step, and/or steps of methods 200 (Fig. 4), which are discussed in more detail herein, to modify outgoing PDU 102 and generate a modified PDU 88, such as a NAT-tagged outgoing PDU 106, that includes a client-specific tag corresponding to the client device 30 that originated outgoing PDU 102. The NAT-tagged outgoing PDU 106 is the outgoing PDU 102 modified by network address translation and by the inclusion of the client-specific tag. NAT device 40 also may create a client table 90 to track the tags used and/or applied to NAT-tagged outgoing PDU 106. Client table 90 indicates the correspondence between the client-specific tag and the associated client device 30, as discussed further herein.

NAT device 40 transmits the NAT-tagged outgoing PDU 106 (instead of the outgoing PDU 102) to upstream device 60 (via the communication linkage 52). NAT device 40 also transmits client table 90 to upstream device 60. The client table 90 may be transmitted in the same channel as the NAT-tagged outgoing PDU 106 or may be transmitted in an alternate channel or communication linkage (e.g., out-of-band communication or communication via a different IP port). Client table 90 may be transmitted before, during, and/or after transmission of the NAT-tagged outgoing PDU 106. Generally, client table 90 is transmitted before and/or close in time to the first use of a given client-specific tag. For example, the first use of a given client-specific tag in a NAT-tagged outgoing PDU 106 may be accompanied by a transmission of client table 90 incorporating the given client-specific tag earlier than 10 seconds (s), earlier than 5s, and/or earlier than 1 s, after the transmission of the NAT-tagged outgoing PDU 106 to the upstream device 60.

NAT device 40 may perform tagging (adding client-specific tags to outgoing PDU 102) for all client devices 30 of the local network 20 or for a selected group (of one or more) of client devices 30. As discussed further herein, NAT device 40 optionally may not perform tagging for every outgoing PDU 102 of a single client device 30.

Upstream device 60 receives the NAT-tagged outgoing PDU 106 and client table 90. In some embodiments, the upstream device 60 may store the client table 90 in a memory accessible to the upstream device 60 (e.g., device memory, memory accessible via a LAN, cloud storage resource, etc.). As discussed in more detail herein with reference to methods 300 (Fig. 4), upstream device 60 may identify the client device 30 associated with the client-specific tag in the NAT-tagged outgoing PDU 106 based upon the client-specific tag in the NAT-tagged outgoing PDU 106 and the correspondence indicated by the client table 90. In this way, the upstream device 60 may identify the source client device 30 associated with a NAT-tagged outgoing PDU 106 received via a NAT device 40. Upstream device 60 may selectively transmit the NAT-tagged outgoing PDU 106 to destination device 70 (as indicated in the original outgoing PDU 102). Upstream device 60 may remove (directly or indirectly) the client-specific tag from NAT-tagged outgoing PDU 106 to create a NAT outgoing PDU 108 that is transmitted to the destination device 70 instead of the NAT-tagged outgoing PDU 106.

As discussed further herein, upstream device 60 may transmit a respective PDU 80, such as the NAT-tagged outgoing PDU 106 and/or the NAT outgoing PDU 108, to a chaperone server 64 that may qualify, validate, filter, and/or otherwise process the respective PDU 80. Additionally or alternatively, chaperone server 64 may transmit the respective PDU 80, or a processed PDU 80, to destination device 70 instead of the upstream device 60 sending the NAT-tagged outgoing PDU 106 or the NAT outgoing PDU 108. For example, the chaperone server 64 may remove client-specific tags from NAT-tagged outgoing PDU 106 to produce the corresponding NAT outgoing PDU 108. As another example, the chaperone server 64 may perform client-specific processing on the NAT-tagged outgoing PDU 106 and/or the NAT outgoing PDU 108.

As discussed in more detail herein with reference to methods 300, the selective transmission of the NAT-tagged outgoing PDU 106 and/or the NAT outgoing PDU 108 to intended destination device 70 may be based, at least in part, on an identity of client device 30 associated with the client-specific tag in the NAT-tagged outgoing PDU 106. That is, because the networking infrastructure 10 described herein enables an upstream device 60 upstream of a NAT device to determine the identity of a source client device 30 of a NAT-tagged outgoing PDU 106 received via the NAT device, the upstream device 60 is able to provide client devices 30 specific services in association with the NAT-tagged outgoing PDU 106 that were not possible in previous networking systems.

For example, the disclosed networking infrastructure 10 may enable upstream device 60 to provide client device 30 specific parental control services to the LAN downstream of the NAT device 40. In such an embodiment, the upstream device 60 may compare the identity of the client device 30 associated with the client-specific tag in the NAT-tagged outgoing PDU 106 to a device permissions schedule to determine how to handle the NAT-tagged outgoing PDU 106.

As another example, and when given client device 30 has been identified as restricted (e.g., containing malicious software, degrading the performance of networking infrastructure 10, beyond usage limits, and/or outside of time of day limits), upstream device 60 may not transmit the NAT-tagged outgoing PDU 106 or the NAT outgoing PDU 108 to destination device 70. Additionally, as the disclosed networking infrastructure 10 enables the upstream device 60 to identify the source client device 30 for the NAT-tagged outgoing PDU 106, when the upstream device identifies that a NAT-tagged outgoing PDU 106 contains malicious software, the upstream device 60 may be able to notify the NAT device 40, the source client device 30, and/or another client device 30 downstream of the NAT device 40 of the exact device that has been infected, suggest actions to address the infection, etc.

In contrast, when given client device 30 is not restricted (e.g., based on PDU traffic, client device authentication, being within usage limits, and/or within time of day limits), upstream device 60 may transmit the NAT-tagged outgoing PDU 106 or the NAT outgoing PDU 108 to the destination device 70. Additionally or alternatively, the upstream device 60 and/or the chaperone server 64 may filter, modify, discard, and/or record certain NAT-tagged outgoing PDU 106 and/or NAT outgoing PDU 108 based upon characteristics of the PDU 80 (e.g., the destination address).

Client device 30 may include and/or be any suitable device that may generate PDU 80, that may send PDU 80 to NAT device 40, and/or that may direct PDU 80 to intended destination device 70. Examples of client device 30 include a personal computer (PC), a laptop computer, a mobile computer, a mobile computing device, a mobile phone, a handheld device, a tablet device, an Internet of things (IoT) device, an entertainment device, and/or a cellular phone.

NAT device 40 may include, and/or may be, any suitable networking infrastructure component that may perform NAT and/or that may be in the communication path between given client device 30 and destination device 70 prior to NAT of outgoing PDU 102. As examples, NAT device 40 may include, and/or may be, a router, a network gateway device, and/or a layer 3 device (network layer device).

Upstream device 60, which may be referred to as a remote network gateway and/or as an upstream internet resource, may include any suitable structure that may receive NAT-tagged outgoing PDU 106, that may receive client table 90, and/or that may direct the NAT-tagged outgoing PDU 106 (optionally in the form of NAT outgoing PDU 108) to destination device 70. Examples of upstream devices 60 include a device of an Internet service provider (ISP) that serves local network 20 (e.g., a router, a switch, a modem, a network gateway, etc.) and/or includes an Internet resource (e.g., a remote server) that resides in the communication path between NAT device 40 and the destination device 70.

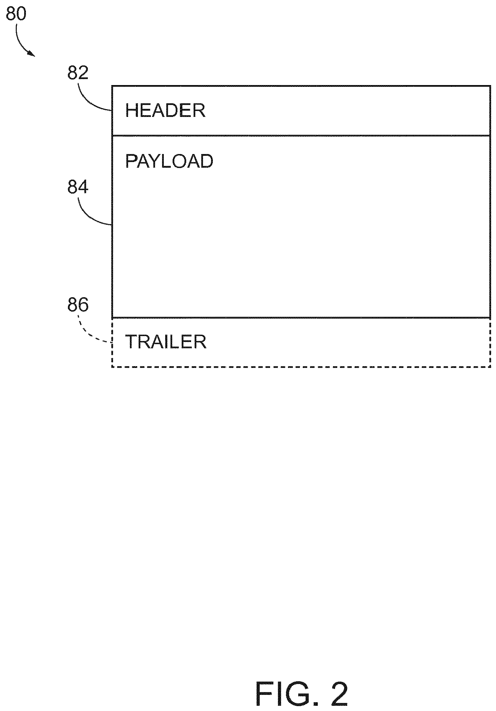

Fig. 2 is a schematic representation of a protocol data unit (PDU) 80 that may be conveyed by the networking infrastructure of Fig. 1. PDUs 80 generally include a header 82 and a payload 84. PDUs 80 also may include a footer 86 (also referred to as a trailer). PDUs 80 are transmitted between a source machine and a destination machine according to the open systems interconnection (OSI) model of networking. The source machine and the destination machine may be any of the devices described with respect to Fig. 1, for example, the client device 30, the NAT device 40, the intermediate device 50, the upstream device 60, the chaperone server 64, and/or the destination device 70.

In the OSI model, there are seven layers in which data may be transmitted. The lower layers are: layer 1 (physical layer 128-1) where symbols (bits) are transmitted along a transmission medium (e.g., wire, fiber optic, radio signal), layer 2 (link layer 128-2) where Ethernet frames transport data between specific machines directly connected, layer 3 (network layer 128-3) where IP packets transport data between specific machines along a network, and layer 4 (transport layer 128-4) where, for example, transmission control protocol (TCP) segments or user datagram protocol (UDP) datagrams transport data to specific software applications at specific machines. The upper layers are: layer 5 (session layer 128-5) where communication sessions are established, managed, and/or terminated, layer 6 (presentation layer 128-6), where coding and conversion functions are applied to application layer data to ensure that all information sent form the application layer of one system is readable by the application layer of another system, and layer 7 (application layer 127-7) where interaction with the software application occurs.

PDUs 80 are the organization of the logical information (payload/data and addressing information) that is conveyed between corresponding layers of the source machine and the destination machine. The PDUs 80 of higher level layers are passed down to the next lower level layer to become the payload (also called the service data unit in this context) of the lower level layer, until the layer 1 (physical layer) is reached. At the physical layer, the layer 1 PDU (which encapsulates the higher level layers' PDUs) is physically transmitted between connected devices along the physical medium. For example, the layer 4 PDU may be a TCP datagram with a layer 4 header and a layer 4 payload. At layer 3 (network layer), the layer 4 PDU is encapsulated in the layer 3 PDU as the layer 3 payload. The layer 3 PDU may be an IP packet with a layer 3 header and a layer 3 payload (the layer 4 PDU). At layer 2 (link layer), the layer 3 PDU is encapsulated in the layer 2 PDU as the layer 2 payload. The layer 2 PDU may be an Ethernet frame with a layer 2 header, a layer 2 payload (the layer 3 PDU), and a layer 2 footer. At layer 1 (physical layer), the layer 2 PDU is encapsulated in the layer 1 PDU as the layer 1 payload. The layer 1 PDU may have a layer 1 header, a layer 1 payload (the layer 2 PDU), and a layer 1 footer.

Header 82 may have a fixed bit length, with essentially all of the bits in header 82 being pre-allocated based upon standard protocols. These bits generally contain addressing information and/or other data that is utilized, by NAT device 40 and/or upstream device 60, to direct PDU 80 to destination device 70. Payload 84 generally includes the information that is to be conveyed from client device 30 to destination device 70. Footer 86, when present, generally includes data to indicate that the end of the PDU 80 has been reached and/or to provide for data integrity verification and/or error correction (e.g., a checksum, a cyclic redundancy check, etc.).

As discussed, essentially all of the bits within header 82 are pre-allocated based upon agreed-upon data transmission protocols. However, all of these bits may not be utilized in every communication instance. Additionally or alternatively, some of these bits may be somewhat superfluous, or unnecessary (e.g., legacy communication tags), for all communication segments in the path between client device 30 and destination device 70. As such, and as discussed in more detail herein, methods 200 and/or 300 may utilize a portion of these bits to provide the identity of client device 30 to upstream device 60.

The header 82 may include and/or be any suitable header. Examples of the header include an IP header, a TCP header, an Ethernet header, a UDP header, an Internet control message protocol (ICMP) header, and/or a hierarchy of layered headers (encapsulated headers). With respect to hierarchical PDU 80 (encapsulated PDU 80), the bits that may be utilized for the tag may be sourced from any of the headers 82 and/or footers 86.

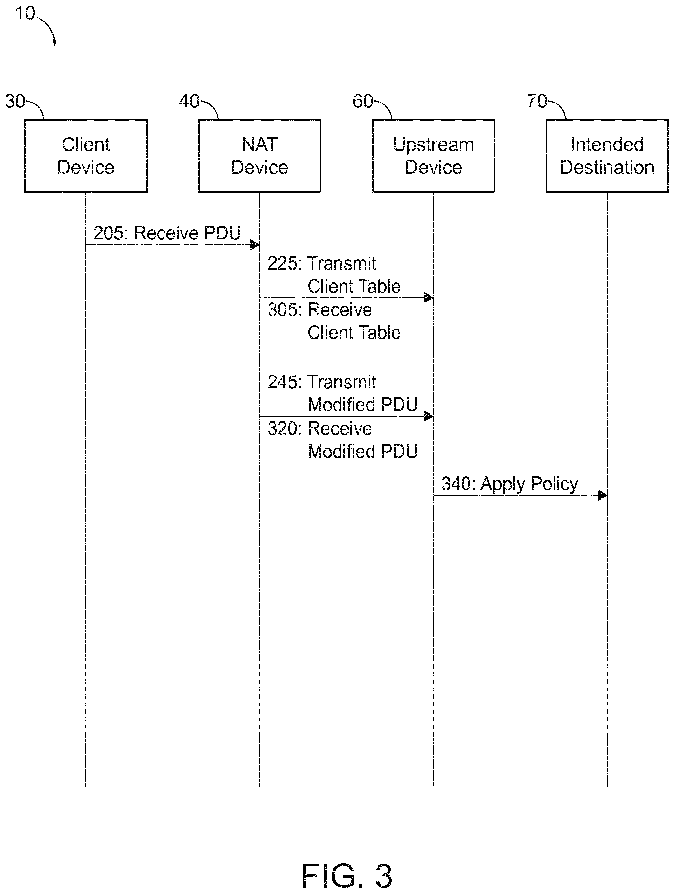

Fig. 3 is a message flow diagram illustrating examples of methods 200 and 300 according to the present disclosure, while Fig. 4 is a flowchart depicting examples of methods 200 and 300 according to the present disclosure. Fig. 4 illustrates that methods 200 generally are performed by NAT device 40, while methods 300 generally are performed by upstream device 60. Fig. 3 illustrates communication flow among client device 30, NAT device 40, upstream device 60, and/or destination device 70 while methods 200 and/or 300 are performed.

Methods 200 include methods of generating client-specific tags, or identifiers, for PDUs utilizing a NAT device that performs network address translation. As discussed herein, each PDU includes a header and a payload. Methods 200 include receiving the PDU at 205, determining a unique client identifier at 210, establishing a client-specific tag at 215, and updating a client table at 220. Methods 200 also include transmitting the client table at 225 and embedding the client-specific tag at 230. Methods 200 further may include flagging a modified PDU at 235 and/or calculating a header checksum at 240 and include transmitting the modified PDU at 245.

Receiving the PDU at 205 may include receiving the PDU with the NAT device. The receiving at 205 also may include receiving the PDU from a given client device of a plurality of client devices serviced by the NAT device, as illustrated in Fig. 3. The receiving at 205 may include receiving any suitable PDU that includes at least the header and the payload, examples of which include a packet, a network packet, and/or a frame. The PDU may be directed to an intended destination device, such as a remote server, which also may be referred to herein as a destination device 70. Stated another way, the PDU may be bound to, addressed to, and/or destined to be sent to the intended destination. However, the NAT device and an upstream device may lie, reside, or be in a path between the given client device and the intended destination.

Determining the unique client identifier at 210 may include determining the unique client identifier for the given client device. Examples of the unique client identifier include a hardware address of the given client device, a hardware media access control (MAC) address of the given client device, and/or any suitable unique device fingerprint of the given client device. The unique client identifier may be determined in any suitable manner. As an example, the unique client identifier may be requested, by the NAT device, from the given client device. As another example, the given client device may transmit, or automatically transmit, the unique client identifier to the NAT device, such as during configuration of the given client device to communicate with the NAT device and/or during transmission of the PDU from the client device to the NAT device.

Establishing the client-specific tag at 215 may include establishing any suitable client-specific tag, which also may be referred to herein as a unique transmitted identifier, for the given client device. As discussed in more detail herein with reference to the embedding at 230, the client-specific tag may be embedded into the header of the PDU. As also discussed herein, the header of the PDU may have a limited bit length, a limited amount of storage space, and/or a limited amount of unallocated storage space. As such, a tag bit length of the client-specific tag may be less than a unique client identifier bit length of the unique client identifier. As examples, the tag bit length may be less than 50%, less than 34%, less than 25%, less than 17%, less than 10%, and/or less than 5% of the unique client identifier bit length. As additional examples, the tag bit length may be at least 1%, at least 2%, at least 4%, at least 6%, at least 8%, and/or at least 10% of the unique client identifier bit length. As more specific examples, and when the unique client identifier is the MAC address, which generally has a bit length of 48 bits, the tag bit length may be at most 24 bits, at most 16 bits, and/or at most 8 bits.

Updating the client table at 220 may include updating the client table in any suitable manner. As an example, the updating at 220 may include storing, or recording, on the NAT device and in the client table, the unique client identifier and the client-specific tag. The client table may correlate a given unique client identifier to a corresponding client-specific tag for each, or each active, client device in the plurality of client devices. Stated another way, the client table may include both a given unique client identifier and a corresponding client-specific tag for each client device that is in communication with, or in active communication with, the NAT device. This may include adding a new client device to the client table responsive to addition of the new client device to the plurality of client devices, responsive to a request, by the new client device, to communicate with the upstream device, and/or responsive to receipt, by the NAT device, of a new PDU from the new client device.

As another example, the updating at 220 may include removing an inactive client device, removing a unique client identifier of the inactive client device, and/or removing a client-specific tag of the inactive client device from the client table. The removing may be responsive to any suitable criteria. As examples, the removing may include removing responsive to expiration of an inactivity timer for the inactive client device and/or responsive to detection, by the NAT device, of removal of the inactive client device from the plurality of client devices.

The updating at 220 may include updating in any suitable manner. As examples, the updating at 220 may include storing and/or removing a given unique client identifier from non-transitory storage media that resides on the NAT device, from volatile data storage media that resides on the NAT device, and/or on persistent data storage media that resides on the NAT device. The client table also may be referred to herein as and/or may be a lookup table, a database, a list, a stack, and/or an array.

Transmitting the client table at 225 may include transmitting the client table with the NAT device and/or to the upstream device and is illustrated in Fig. 3. The transmitting at 225 may be performed within any suitable timing and/or sequence during methods 200. As examples, the transmitting at 225 may include periodically transmitting the client table, transmitting the client table on a predetermined transmission schedule, transmitting the client table responsive to a change in the client table, transmitting the client table responsive to a request from the upstream device, transmitting the client table responsive to receipt of the PDU from the given client device, and/or transmitting the client table responsive to receipt of a new PDU from a new client device.

Embedding the client-specific tag at 230 may include embedding the client-specific tag with the NAT device and/or embedding the client-specific tag within the header of the PDU. This may include embedding to produce and/or generate a modified PDU, which may include a modified header that includes the client-specific tag. The modified PDU also may be referred to herein as a NAT-tagged outgoing PDU. The embedding at 230 may include overwriting the header of the PDU with the modified header to generate the modified PDU. The embedding at 230 additionally or alternatively may include and/or be adding the client-specific tag to the header and/or injecting the client-specific tag into the header.

Flagging the modified PDU at 235 may include flagging, identifying, and/or indicating that the modified PDU has been modified via addition of the client-specific tag and may be performed in any suitable manner. This may include flagging to notify, to inform, and/or to alert the upstream device that the modified PDU includes the client-specific tag. As an example, the flagging at 235 may include specifying a state of at least one flag bit of the header of the modified PDU.

Calculating the header checksum at 240 may include calculating, or re-calculating, the header checksum of the modified PDU to generate a modified header checksum. The calculating at 240 may be performed subsequent to the embedding at 230 and/or prior to the transmitting at 245. When methods 200 include the calculating at 240, the transmitting at 245 may include transmitting the modified PDU with the modified header checksum.

Transmitting the modified PDU at 245 may include transmitting the modified PDU with the NAT device and/or to the upstream device and is illustrated in Fig. 3. The transmitting at 245 may include transmitting subsequent to network address translation of the modified PDU by the NAT device. Additionally or alternatively, the transmitting at 245 may include transmitting the modified PDU with the modified header, which includes the client-specific tag of the given client device. As such, and as discussed in more detail herein with reference to methods 300, the transmitting at 245 may facilitate identification of the given client device by the upstream device.

Methods 300 include methods of interpreting client-specific tags, or identifiers, within a PDU with an upstream device. Methods 300 include receiving a client table at 305 and associating the client table at 310. Methods 300 may include creating a second client table at 315 and include receiving a modified PDU at 320. Methods 300 also include analyzing the modified PDU at 325, extracting a client-specific tag at 330, and determining a unique client identifier at 335. Methods 300 further may include applying policy at 340 and/or unflagging the modified PDU at 345.

Receiving the client table at 305 may include receiving the client table with the upstream device and/or from a NAT device and is illustrated in Fig. 3. In some embodiments, the upstream device may store the client table in a memory accessible to the upstream device. The client table may correlate a given unique client identifier to a corresponding client-specific tag for a given client device of a plurality of client devices serviced by the NAT device. The client table additionally may include a given unique client identifier and a corresponding client-specific tag for each, or each active, client device in the plurality of client devices.

Associating the client table at 310 may include associating, or correlating, the client table to an identity of the NAT device. Stated another way, the associating at 310 may include identifying which NAT device, of a plurality of NAT devices serviced by the upstream device, provided the client table to the upstream device during the receiving at 305. Additionally or alternatively, the associating at 310 may include indicating, tabulating, saving, and/or otherwise identifying which NAT device provided the client table to the upstream device and/or associating for each NAT device that is connected to, or serviced by, the upstream device. The associating at 310 may be performed by the upstream device.

The associating at 310 may be accomplished in any suitable manner. As an example, the associating at 310 may include associating the client table to a unique hardware identifier of the NAT device, such as a wide area network Internet protocol (WAN IP) address of the NAT device.

The client table received during the receiving at 305 may be a first client table, and methods 300 may include creating, or generating, at 315, the second client table. The creating at 315 may include creating the second client table with the upstream device, and the second client table may correlate an identity of an active communication link to the unique client identifier of the given client device. Stated another way, the upstream device may identify a communication pathway utilized to receive the modified PDU from the given client device, and the second table may correlate the communication pathway to the unique client identifier of the given client device.

The active communication link may include and/or be based upon a source IP address of the NAT device, a source port of the NAT device utilized to transmit the modified PDU to the upstream device, a destination IP address for an intended destination of the modified PDU, and/or a destination port for the intended destination of the modified PDU.

When methods 300 include the creating at 315, methods 300 further may include utilizing the second client table subsequent to performing the creating at 315. The second client table may be utilized to identify the given client device as the source of a subsequent PDU, which is received by the upstream device, that does not include the client-specific tag.

Receiving the modified PDU at 320 may include receiving the modified PDU from the NAT device and/or with the upstream device and is illustrated in Fig. 3. The modified PDU includes a payload and a modified header. The modified header includes a client-specific tag for the given client device.

Analyzing the modified PDU at 325 may include analyzing the modified PDU to determine that the modified header includes the client-specific tag. The analyzing at 325 may be performed by the upstream device and may be accomplished in any suitable manner. As examples, the analyzing at 325 may include inspecting the modified PDU, determining that the modified PDU includes the modified header, and/or determining that the client-specific tag is present within the modified header. As another example, the analyzing at 325 may include detecting a state of a flag bit within the modified PDU and/or within the modified header thereof.

It is within the scope of the present disclosure that the analyzing at 325 may include analyzing an entirety of the modified PDU and/or an entirety of the modified header. Additionally or alternatively, the analyzing at 325 may include analyzing a fixed location within the modified header, analyzing a given location within the modified header, and/or analyzing a predetermined location within the modified header.

Extracting the client-specific tag at 330 may include extracting the client-specific tag for the given client device from the modified header. The extracting at 330 may be performed by the upstream device.

Determining the unique client identifier at 335 may include determining the unique client identifier of the given client device based, at least in part, on the identity of the NAT device, the client table, and the client-specific tag. As an example, the determining at 335 may include utilizing the client table to determine which unique client identifier corresponds to the client-specific tag. As additional examples, the determining at 335 may include utilizing the client table to identify the given client device based upon the client-specific tag, to determine the MAC address of the given client device based upon the client-specific tag, and/or to determine a unique device fingerprint of the given client device based upon the unique client identifier. The determining at 335 may be performed by the upstream device.

Applying policy at 340 may include applying any suitable policy to the modified PDU based, at least in part, on the given unique client identifier. As an example, the applying at 340 may include, or instead may be, filtering the modified PDU based, at least in part, on the unique client identifier. In this way, the upstream device can provide client device-specific services for computing devices that are downstream of a NAT device, which may not have been possible in previous networking systems. For example, where the upstream device is configured to provide parental control services, once the upstream device determines the identity of a source client device for the modified PDU, the upstream device may determine whether to transmit the PDU to the intended destination based upon the parental control conditions associated with the source client device. The applying at 340 is illustrated in Fig. 3.

Examples of the filtering are disclosed in U.S. Patent Application Publication Nos. 2012/0213094 and 2017/0214597. The complete disclosures of these patent application publications are hereby incorporated by reference.

Unflagging the modified PDU at 345 may include unflagging the modified PDU to generate an unflagged PDU. Additionally or alternatively, the unflagging at 345 may include resetting the flag bit of the modified PDU to generate the unflagged PDU. The unflagging at 345 may include unflagging based upon known and/or predetermined knowledge of default, correct, and/or prior values of a header of the PDU prior to the client-specific tag being embedded within the header of the PDU to generate the modified header and/or the modified PDU.

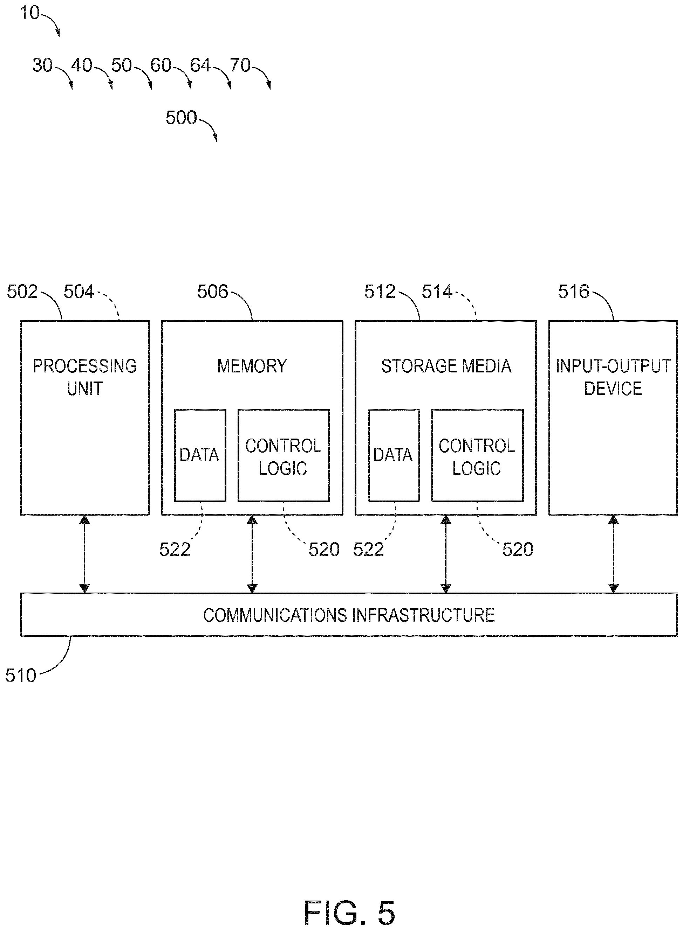

Fig. 5 is a schematic representation of an example of a computing device 500 that may be included in and/or utilized with client devices 30, NAT devices 40, intermediate devices 50, upstream devices 60, chaperone servers 64, and/or destination devices 70 according to the present disclosure. Stated another way, each of client devices 30, NAT devices 40, intermediate devices 50, upstream devices 60, chaperone servers 64, and/or destination devices 70, independently may include and/or be an example of computing device 500. Computing device 500 may be used to implement and/or instantiate the methods, components, and features described herein.

Computing device 500 includes a processing unit 502 operatively coupled to a computer-readable storage memory 506 by a communications infrastructure 510. The processing unit 502 may include one or more computer processors 504 and may include a distributed group of computer processors 504. The processing unit 502 may include, or be implemented on, programmable, reconfigurable, and/or dedicated hardware such as field-programmable gate arrays, digital signal processors, and/or application-specific integrated circuits.

The computing device 500 also may include a computer-readable storage media assemblage 512 that is operatively coupled to the processing unit 502 and/or the computer-readable storage memory 506, e.g., by communications infrastructure 510. The computer-readable storage media assemblage 512 may include one or more non-transitory computer-readable storage media 514 and may include a distributed group of non-transitory computer-readable storage media 514. The computer-readable storage memory 506, the computer-readable storage media assemblage 512, and the non-transitory computer-readable storage media 514 each are computer-readable media. Computer-readable media are tangible and are not merely transitory signals.

The communications infrastructure 510 may include a local data bus, a communication interface, and/or a network interface (e.g., a personal-area network interface, a local-area network interface, a wide-area network interface, and/or an Internet interface). The communications infrastructure 510 may be configured to transmit and/or to receive signals, such as electrical, electromagnetic, optical, and/or acoustic signals.

The computing device 500 may include one or more input-output devices 516 operatively coupled to the processing unit 502, the computer-readable storage memory 506, and/or the computer-readable storage media assemblage 512. Input-output devices 516 may be configured for visual, audio, and/or tactile input and/or output from or to a user. Each input-output device 516 independently may be configured for only input, only output, primarily input, primarily output, and/or a combination of input and output. Examples of input-output devices 516 include monitors (e.g., video monitor), displays (e.g., alphanumeric displays, lamps, and/or LEDs), keyboards, pointing devices (e.g., mice), touch screens, speakers, buzzers, and controls (e.g., buttons, knobs, etc.).

The computing device 500 may include a distributed group of components, which each may be interconnected directly or indirectly. Thus, the computing device 500 may include one or more processing units 502, computer-readable storage memories 506, computer-readable storage media assemblages 512, and/or input-output devices 516.

One or both of the computer-readable storage memory 506 and the computer-readable storage media assemblage 512 include control logic 520 and/or data 522. Control logic 520 (which may also be referred to as software, firmware, gateware, and/or hardware) may include instructions and/or information that, when executed by the processing unit 502, cause the computing device 500 to perform one or more of the methods described herein. Control logic 520 and/or data 522 may include applications (e.g., a control application), resources, access controls, and/or associated information.

Where client devices 30, NAT devices 40, intermediate devices 50, upstream devices 60, chaperone servers 64, and/or destination devices 70 are described as performing one or more functions, the respective device also may be referred to herein as being configured, e.g., programmed, to perform the function(s). The respective device may include one or more programs, modules, and/or components configured, e.g., programmed, to perform the function(s) when the programs, modules, and/or components are executed by the processing unit 502 or otherwise operated by the computing device 500. The control logic 520 and/or data 522 may include instructions and/or information corresponding to the programs, modules, and/or components.

In the present disclosure, several of the illustrative, non-exclusive examples have been discussed and/or presented in the context of flow diagrams, or flow charts, in which the methods are shown and described as a series of blocks, or steps. Unless specifically set forth in the accompanying description, it is within the scope of the present disclosure that the order of the blocks may vary from the illustrated order in the flow diagram, including with two or more of the blocks (or steps) occurring in a different order and/or concurrently. It is also within the scope of the present disclosure that the blocks, or steps, may be implemented as logic, which also may be described as implementing the blocks, or steps, as logics. In some applications, the blocks, or steps, may represent expressions and/or actions to be performed by functionally equivalent circuits or other logic devices. The illustrated blocks may, but are not required to, represent executable instructions that cause a computer, processor, and/or other logic device to respond, to perform an action, to change states, to generate an output or display, and/or to make decisions.

As used herein, the term "and/or" placed between a first entity and a second entity means one of (1) the first entity, (2) the second entity, and (3) the first entity and the second entity. Multiple entities listed with "and/or" should be construed in the same manner, i.e., "one or more" of the entities so conjoined. Other entities may optionally be present other than the entities specifically identified by the "and/or" clause, whether related or unrelated to those entities specifically identified. Thus, as a non-limiting example, a reference to "A and/or B," when used in conjunction with open-ended language such as "comprising" may refer, in one embodiment, to A only (optionally including entities other than B); in another embodiment, to B only (optionally including entities other than A); in yet another embodiment, to both A and B (optionally including other entities). These entities may refer to elements, actions, structures, steps, operations, values, and the like.

As used herein, the phrase "at least one," in reference to a list of one or more entities should be understood to mean at least one entity selected from any one or more of the entity in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one embodiment, to at least one, optionally including more than one, A, with no B present (and optionally including entities other than B); in another embodiment, to at least one, optionally including more than one, B, with no A present (and optionally including entities other than A); in yet another embodiment, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B and C," "at least one of A, B, or C," "one or more of A, B, and C," "one or more of A, B, or C" and "A, B, and/or C" may mean A alone, B alone, C alone, A and B together, A and C together, B and C together, A, B and C together, and optionally any of the above in combination with at least one other entity.

In the event that any patents, patent applications, or other references are incorporated by reference herein and (1) define a term in a manner that is inconsistent with and/or (2) are otherwise inconsistent with, either the non-incorporated portion of the present disclosure or any of the other incorporated references, the non-incorporated portion of the present disclosure shall control, and the term or incorporated disclosure therein shall only control with respect to the reference in which the term is defined and/or the incorporated disclosure was present originally.

As used herein the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of' performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa.

As used herein, the phrase, "for example," the phrase, "as an example," and/or simply the term "example," when used with reference to one or more components, features, details, structures, embodiments, and/or methods according to the present disclosure, are intended to convey that the described component, feature, detail, structure, embodiment, and/or method is an illustrative, non-exclusive example of components, features, details, structures, embodiments, and/or methods according to the present disclosure. Thus, the described component, feature, detail, structure, embodiment, and/or method is not intended to be limiting, required, or exclusive/exhaustive; and other components, features, details, structures, embodiments, and/or methods, including structurally and/or functionally similar and/or equivalent components, features, details, structures, embodiments, and/or methods, are also within the scope of the present disclosure.

Examples of subject matter according to the present disclosure are described in the following enumerated paragraphs.
A1. A method of generating client-specific identifiers for a protocol data unit (PDU) utilizing a network address translation (NAT) device that performs network address translation, wherein the PDU includes a header and a payload, the method comprising:
   receiving, from a given client device of a plurality of client devices serviced by the NAT device and with the NAT device, the PDU;
   determining, with the NAT device, a unique client identifier for the given client device;
   establishing, with the NAT device, a client-specific tag for the given client device;
   storing, on the NAT device, the unique client identifier and the client-specific tag in a client table that correlates a given unique client identifier to a corresponding client-specific tag for each active client device in the plurality of client devices;
   transmitting, with the NAT device and to an upstream device, the client table;
   embedding, with the NAT device, the client-specific tag within the header of the PDU to generate a modified PDU; and
   transmitting, with the NAT device and to the upstream device, the modified PDU.
A2. The method of paragraph A1, wherein the receiving the PDU includes receiving at least one of:
   (i) a packet;
   (ii) a network packet; and
   (iii) a frame.
A3. The method of any of paragraphs A1-A2, wherein the receiving the PDU includes receiving a PDU that is at least one of:
   (i) bound to a remote server, or an intended destination, via the upstream device;
   (ii) destined to be sent to the remote server, or the intended destination, via the upstream device; and
   (iii) addressed to the remote server, or the intended destination, via the upstream device.
A4. The method of any of paragraphs A1-A3, wherein the NAT device includes, and optionally is instead, at least one of:
   (i) a network gateway device; and
   (ii) a layer 3 device.
A5. The method of any of paragraphs A1-A4, wherein the header includes at least one of:
   (i) an Internet protocol (IP) header;
   (ii) a transmission control protocol (TCP) header;
   (iii) an Ethernet header;
   (iv) a user datagram protocol (UDP) header;
   (v) an Internet control message protocol (ICMP) header; and
   (vi) a hierarchy of layered headers.
A6. The method of any of paragraphs A1-A5, wherein the given client device includes at least one of:
   (i) a personal computer (PC);
   (ii) a laptop computer;
   (iii) a mobile computer;
   (iv) a mobile computing device;
   (v) a mobile phone;
   (vi) a handheld device;
   (vii) a tablet device;
   (viii) an Internet of things (IoT) device;
   (ix) an entertainment device; and
   (x) a cellular phone.
A7. The method of any of paragraphs A1-A6, wherein the determining the unique client identifier includes determining at least one of:
   (i) a hardware media access control (MAC) address of the given client device; and
   (ii) a unique device fingerprint of the given client device.
A8. The method of any of paragraphs A1-A7, wherein the establishing the client-specific tag includes establishing a client-specific tag with a tag bit length that is less than a unique client identifier bit length of the unique client identifier.
A8.1 The method of paragraph A8, wherein the tag bit length is at least one of:
   (i) less than 50% of the unique client identifier bit length;
   (ii) less than 34% of the unique client identifier bit length;
   (iii) less than 25% of the unique client identifier bit length;
   (iv) less than 17% of the unique client identifier bit length;
   (v) a most 16 bits in length; and
   (vi) at most 8 bits in length.
A9. The method of any of paragraphs A1-A8.1, wherein the storing the unique client identifier includes recording the unique client identifier within the client table.
A10. The method of any of paragraphs A1-A9, wherein the storing the unique client identifier includes at least one of:
   (i) storing on non-transitory data storage media of the NAT device;
   (ii) storing on volatile data storage media of the NAT device; and
   (iii) storing on persistent data storage media of the NAT device.
A11. The method of any of paragraphs A1-A10, wherein the storing the unique client identifier includes storing a/the given unique client identifier and a/the corresponding client-specific tag for each client device in the plurality of client devices.
A12. The method of any of paragraphs A1-A11, wherein the storing the unique client identifier includes adding a new client device to the client table responsive to at least one of:
   (i) addition of the new client device to the plurality of client devices;
   (ii) a request, by the new client device, to communicate with the upstream device; and
   (iii) receipt, by the NAT device, of a new PDU from the new client device.
A13. The method of any of paragraphs A1-A12, wherein the client table includes, and optionally is instead, at least one of:
   (i) a database;
   (ii) a list;
   (iii) a stack; and
   (iv) an array.
A14. The method of any of paragraphs A1-A13, wherein the method further includes removing an inactive client device from the client table, optionally wherein the removing is responsive to at least one of:
   (i) expiration of an inactivity timer for the inactive client device; and
   (ii) detection, by the NAT device, of removal of the inactive client device from the plurality of client devices.
A15. The method of any of paragraphs A1-A14, wherein the transmitting the client table includes at least one of:
   (i) periodically transmitting the client table;
   (ii) transmitting the client table on a predetermined transmission schedule;
   (iii) transmitting the client table responsive to a change in the client table;
   (iv) transmitting the client table responsive to a request from the upstream device;
   (v) transmitting the client table responsive to receipt of the PDU from the given client device; and
   (vi) transmitting the client table responsive to receipt of a/the new PDU from a/the new client device.
A16. The method of any of paragraphs A1-A15, wherein the upstream device includes at least one of:
   (i) an Internet resource of an Internet service provider (ISP) of the NAT device;
   (ii) an Internet resource that is in a path from the NAT device to an/the intended destination of the PDU.
A17. The method of any of paragraphs A1-A16, wherein the embedding the client-specific tag includes overwriting the header with a modified header.
A18. The method of any of paragraphs A1-A17, wherein the embedding the client-specific tag includes, or optionally is instead, at least one of:
   (i) adding the client-specific tag to the header; and
   (ii) injecting the client-specific tag into the header.
A19. The method of any of paragraphs A1-A18, wherein the transmitting the modified PDU includes transmitting the modified PDU subsequent to network address translation of the modified PDU by the NAT device.
A20. The method of any of paragraphs A1-A19, wherein the transmitting the modified PDU includes transmitting the modified PDU with a/the modified header, which includes the client-specific tag.
A21. The method of any of paragraphs A1-A20, wherein the method further includes flagging the modified PDU to notify the upstream device that the modified PDU includes the client-specific tag.
A22. The method of paragraph A21, wherein the flagging the modified PDU includes specifying a state of a flag bit of the header of the modified PDU.
A23. The method of any of paragraphs A1-A22, wherein, subsequent to the embedding the client-specific tag and prior to the transmitting the modified PDU, the method further includes re-calculating a header checksum of the modified PDU to generate a modified header checksum, wherein the transmitting the modified PDU includes transmitting with the modified header checksum.
A24. A network address translation (NAT) device that services a plurality of client devices to facilitate communication between the plurality of client devices and an upstream device, wherein the NAT device is programmed to:
   (i) perform network address translation; and
   (ii) provide, to the upstream device, a unique client identifier of a given client device of the plurality of client devices by performing the method of any of paragraphs A1-A23.
A25. A local area network, comprising:
   a plurality of client devices;
   the NAT device of paragraph A24;
   a plurality of local area communication linkages, wherein each of the plurality of local area communication linkages provides communication between at least one of the plurality of client devices and the NAT device; and
   a communication linkage that provides communication between the NAT device and an upstream device.
A26. Non-transitory computer-readable storage media including computer-readable instructions that, when executed, direct a NAT device to perform the method of any of paragraphs A1-A23.
B1. A method of interpreting client-specific identifiers within a protocol data unit (PDU) with an upstream device, the method comprising:
   receiving, from a NAT device and with the upstream device, a client table, wherein the client table correlates a given unique client identifier to a corresponding client-specific tag for a given client device of a plurality of client devices serviced by the NAT device;
   associating, with the upstream device, the client table to an identity of the NAT device;
   receiving, from the NAT device and with the upstream device, a modified PDU, wherein the modified PDU includes a payload and a modified header that includes a client-specific tag for the given client device;
   analyzing, with the upstream device, the modified PDU to determine that the modified header includes the client-specific tag;
   extracting, with the upstream device and from the modified header, the client-specific tag for the given client device; and
   determining, with the upstream device, based upon the client-specific tag and the identity of the NAT device, and from the client table, the given unique client identifier of the given client device.
B2. The method of paragraph B1, wherein the receiving the client table includes receiving a/the given unique client identifier and a/the corresponding client-specific tag for at least one of:
   (i) each client device in the plurality of client devices;
   (ii) each active client device in the plurality of client devices.
B3. The method of any of paragraphs B1-B2, wherein the associating the client table includes, and optionally is instead, correlating the client table to the identity of the NAT device.
B4. The method of any of paragraphs B1-B3, wherein the associating the client table includes associating the client table to a unique hardware identifier of the NAT device, optionally wherein the unique hardware identifier of the NAT device includes a wide area network Internet protocol (WAN IP) address of the NAT device.
B5. The method of any of paragraphs B1-B4, wherein the associating the client table includes associating to facilitate relating a given client table to an/the identity of a corresponding NAT device for each NAT device that is connected to the upstream device.
B6. The method of any of paragraphs B1-B5, wherein the analyzing the modified PDU includes, and optionally is instead, at least one of:
   (i) inspecting the modified PDU; and
   (ii) determining that the modified PDU includes the modified header that includes the client-specific tag.
B7. The method of any of paragraphs B1-B6, wherein the analyzing the modified PDU includes detecting a state of a flag bit within the modified PDU.
B8. The method of any of paragraphs B1-B7, wherein the analyzing the modified PDU includes analyzing the modified header to determine that the client-specific tag is present within the modified header.
B9. The method of any of paragraphs B1-B8, wherein the analyzing the modified PDU includes at least one of:
   (i) analyzing a fixed location within the modified header;
   (ii) analyzing a given location within the modified header; and
   (iii) analyzing a predetermined location within the modified header.
B10. The method of any of paragraphs B1-B9, wherein the determining the given unique client identifier includes utilizing the client table to at least one of:
   (i) identify the given client device based upon the client-specific tag;
   (ii) determine a media access control (MAC) address of the given client device based upon the client-specific tag; and
   (iii) determine a unique device fingerprint of the given client device based upon the unique client identifier.
B11. The method of any of paragraphs B1-B10, wherein the client table is a first client table, and further wherein the method includes generating, with the upstream device, a second client table, wherein the second client table correlates an identity of an active communication link to the unique client identifier of the given client device.
B11.1 The method of paragraph B11, wherein the active communication link is based, at least in part, on at least one of:
   (i) a source Internet protocol (IP) address of the NAT device;
   (ii) a source port of the NAT device utilized to transmit the modified PDU to the upstream device;
   (iii) a destination IP address for an intended destination of the modified PDU; and
   (iv) a destination port for the intended destination of the modified PDU.
B11.2 The method of any of paragraphs B11-B11.1, wherein, subsequent to the generating the second client table, the method further includes utilizing the second client table to identify the given client device as the source of a subsequent PDU, received by the upstream device, that does not include the client-specific tag.
B12. The method of any of paragraphs B1-B11.2, wherein the method further includes applying a policy to the modified PDU based, at least in part, on the given unique client identifier.
B13. The method of any of paragraphs B1-B12, wherein the method further includes filtering the modified PDU based, at least in part, on the given unique client identifier.
B14. The method of any of paragraphs B1-B13, wherein, subsequent to the extracting the client-specific tag, the method further includes at least one of:
   (i) unflagging the modified PDU to generate an unflagged PDU; and
   (ii) resetting a/the flag bit of the modified PDU to generate the unflagged PDU.
B15. The method of any of paragraphs B1-B14, wherein the receiving the client table and the receiving the modified PDU includes receiving from a NAT device programmed to perform the method of any of paragraphs A1-A23.
B16. An Internet service provider, comprising:
   an upstream device; and
   a communication linkage that provides communication between the upstream device and a NAT device that services a plurality of client devices;
   wherein the upstream device is programmed to determine a given unique client identifier of a given client device of the plurality of client devices utilizing the method of any of paragraphs B1-B15.
B17. Non-transitory computer-readable storage media including computer-readable instructions that, when executed, direct an upstream device to perform the method of any of paragraphs B1-B15.

### INDUSTRIAL APPLICABILITY

The devices, networks, storage media, and methods disclosed herein are applicable to the networking infrastructure industry.

The various disclosed elements of systems and steps of methods disclosed herein are not required of all systems and methods according to the present disclosure, and the present disclosure includes all novel and non-obvious combinations and subcombinations of the various elements and steps disclosed herein. Moreover, any of the various elements and steps, or any combination of the various elements and/or steps, disclosed herein may define independent inventive subject matter that is separate and apart from the whole of a disclosed system or method. Accordingly, such inventive subject matter is not required to be associated with the specific systems and methods that are expressly disclosed herein, and such inventive subject matter may find utility in systems and/or methods that are not expressly disclosed herein.

It is believed that the disclosure set forth above encompasses multiple distinct inventions with independent utility. While each of these inventions has been disclosed in its preferred form, the specific embodiments thereof as disclosed and illustrated herein are not to be considered in a limiting sense as numerous variations are possible. The subject matter of the inventions includes all novel and non-obvious combinations and subcombinations of the various elements, features, functions and/or properties disclosed herein. Similarly, where the claims recite "a" or "a first" element or the equivalent thereof, such claims should be understood to include incorporation of one or more such elements, neither requiring nor excluding two or more such elements.

It is believed that the following claims particularly point out certain combinations and subcombinations that are directed to one of the disclosed inventions and are novel and non-obvious. Inventions embodied in other combinations and subcombinations of features, functions, elements and/or properties may be claimed through amendment of the present claims or presentation of new claims in this or a related application. Such amended or new claims, whether they are directed to a different invention or directed to the same invention, whether different, broader, narrower, or equal in scope to the original claims, are also regarded as included within the subject matter of the inventions of the present disclosure.

## Claims

1. A method of generating client-specific identifiers for a protocol data unit (PDU) utilizing a network address translation (NAT) device that performs network address translation, wherein the PDU includes a header and a payload, the method comprising:
receiving, from a given client device of a plurality of client devices serviced by the NAT device and with the NAT device, the PDU;
determining, with the NAT device, a unique client identifier for the given client device;
establishing, with the NAT device, a client-specific tag for the given client device;
storing, on the NAT device, the unique client identifier and the client-specific tag in a client table that correlates a given unique client identifier to a corresponding client-specific tag for each active client device in the plurality of client devices;
transmitting, with the NAT device and to an upstream device, the client table;
embedding, with the NAT device, the client-specific tag within the header of the PDU to generate a modified PDU; and
transmitting, with the NAT device and to the upstream device, the modified PDU.

2. The method of claim 1, wherein the establishing the client-specific tag includes establishing a client-specific tag with a tag bit length that is less than a unique client identifier bit length of the unique client identifier.

3. The method of any of claims 1-2, wherein the storing the unique client identifier includes at least one of:
(i) recording the unique client identifier within the client table; and
(ii) storing the given unique client identifier and the corresponding client-specific tag for each client device in the plurality of client devices.

4. The method of any of claims 1-3, wherein the storing the unique client identifier includes adding a new client device to the client table responsive to at least one of:
(i) addition of the new client device to the plurality of client devices;
(ii) a request, by the new client device, to communicate with the upstream device; and
(iii) receipt, by the NAT device, of a new PDU from the new client device.

5. The method of any of claims 1-4, wherein the method further includes removing an inactive client device from the client table.

6. The method of any of claims 1-5, wherein the embedding the client-specific tag includes overwriting the header with a modified header.

7. The method of any of claims 1-6, wherein the transmitting the modified PDU includes at least one of:
(i) transmitting the modified PDU subsequent to network address translation of the modified PDU by the NAT device; and
(ii) transmitting the modified PDU with a modified header, which includes the client-specific tag.

8. The method of any of claims 1-7, wherein the method further includes flagging the modified PDU to notify the upstream device that the modified PDU includes the client-specific tag, optionally wherein the flagging the modified PDU includes specifying a state of a flag bit of the header of the modified PDU.

9. The method of any of claims 1-8, wherein, subsequent to the embedding the client-specific tag and prior to the transmitting the modified PDU, the method further includes re-calculating a header checksum of the modified PDU to generate a modified header checksum, wherein the transmitting the modified PDU includes transmitting with the modified header checksum.

10. A network address translation (NAT) device that services a plurality of client devices to facilitate communication between the plurality of client devices and an upstream device, wherein the NAT device is programmed to:
(i) perform network address translation; and
(ii) provide, to the upstream device, a unique client identifier of a given client device of the plurality of client devices by performing the method of any of claims 1-9.

11. A local area network, comprising:
a plurality of client devices;
the NAT device of claim 10;
a plurality of local area communication linkages, wherein each of the plurality of local area communication linkages provides communication between at least one of the plurality of client devices and the NAT device; and
a communication linkage that provides communication between the NAT device and an upstream device.

12. Non-transitory computer-readable storage media including computer-readable instructions that, when executed, direct a NAT device to perform the method of any of claims 1-9.

13. An Internet service provider, comprising:
an upstream device; and
a communication linkage that provides communication between the upstream device and a NAT device that services a plurality of client devices;
wherein the upstream device is programmed to determine a given unique client identifier of a given client device of the plurality of client devices by:
receiving, from the NAT device and with the upstream device, a client table, wherein the client table correlates the given unique client identifier to a corresponding client-specific tag for the given client device of the plurality of client devices serviced by the NAT device;
associating, with the upstream device, the client table to an identity of the NAT device;
receiving, from the NAT device and with the upstream device, a modified PDU, wherein the modified PDU includes a payload and a modified header that includes a client-specific tag for the given client device;
analyzing, with the upstream device, the modified PDU to determine that the modified header includes the client-specific tag;
extracting, with the upstream device and from the modified header, the client-specific tag for the given client device; and
determining, with the upstream device, based upon the client-specific tag and the identity of the NAT device, and from the client table, the given unique client identifier of the given client device.

14. The Internet service provider of claim 13, wherein the determining the given unique client identifier includes utilizing the client table to at least one of:
(i) identify the given client device based upon the client-specific tag;
(ii) determine a media access control (MAC) address of the given client device based upon the client-specific tag; and
(iii) determine a unique device fingerprint of the given client device based upon the given unique client identifier.

15. The Internet service provider of any of claims 13-14, wherein the upstream device further is programmed to at least one of:
(i) apply a policy to the modified PDU based, at least in part, on the given unique client identifier; and
(ii) filter the modified PDU based, at least in part, on the given unique client identifier.
